# EUROPÄISCHE PATENTSCHRIFT

(11) **EP 0 465 889 B1**
(45) Veröffentlichungstag und Bekanntmachung des Hinweises auf die Patenterteilung: **21.12.1994**
(21) Anmeldenummer: 91110138.4
(22) Anmeldetag: 20.06.1991
(51) Int. Cl.: B29C 47/06, B29C 47/20

(54) **Vorrichtung zum Herstellen von Hohlkörpern aus thermoplastischem Kunststoff**
Apparatus for manufacturing hollow thermoplastic bodies
Dispositif pour la fabrication de corps creux en matière thermoplastique

(30) Priorität: 29.06.1990 DE 4020819
(43) Veröffentlichungstag der Anmeldung: 15.01.1992
(73) Patentinhaber: Krupp Kautex Maschinenbau GmbH, 53229 Bonn (DE)
(72) Erfinder: Bock, Stefan, Dipl.-Ing., W-1000 Berlin 41 (DE)
(74) Vertreter: Koepsell, Helmut, Dipl.-Ing.

(56) Entgegenhaltungen:
- DE-A- 3 623 308
- US-A- 4 548 569
- PATENT ABSTRACTS OF JAPAN vol. 4, no. 33 (M-3)(515) 21. März 1980 & JP-A-55 005 837 (SUMITOMO JUKIKAI KOGYO KK) 17. Januar 1980

## Beschreibung

Die Erfindung betrifft eine Vorrichtung gemäß dem Oberbegriff des Anspruches 1, bei der es sich um eine Extrusionseinheit mit einem Speicherkopf handelt, der durch einen hin- und herbewegbaren Kolben entleerbar ist.

Bei einer derartigen durch die DE-A-16 29 404 bekannten Vorrichtung ist der im Querschnitt ringförmige Kolben an seiner einzigen Mantelfläche mit einer nutförmigen Ausnehmung versehen, die parallel zu den vom Kolben ausgeführten Bewegungen verläuft und deren Länge etwa dem Hub des Kolbens entspricht. Letzterer ist innerhalb eines Gehäuses angeordnet, das auch den Speicherraum enthält und zudem mit einer Öffnung versehen ist, durch die der in einem Extruder plastifizierte Kunststoff in das Gehäuse eintritt. Die Anordnung ist so getroffen, daß der durch die nutförmige Ausnehmung im Kolben gebildete Aufnahmekanal dieser Eintrittsöffnung gegenüberliegt und somit der durch die Eintrittsöffnung in das Gehäuse eintretende Kunststoff zunächst in diesen Aufnahmekanal gelangt, in welchem er in Richtung auf die sich daran anschließende Ableitung strömt. Der Nachteil der bekannten Vorrichtung besteht darin, daß der Aufnahmekanal nur in einer Stellung des Kolbens, nämlich der, in welcher sich der Kolben in seiner der Austrittsöffnung des Kopfes zugewandten Endposition befindet, von dem aus dem Extruder kommenden plastifizierten Material über seine gesamte Länge durchströmt wird. In allen anderen Positionen des Kolbens befindet sich immer ein Abschnitt des Aufnahmekanals, der außenseitig vom Gehäuse begrenzt wird, an der dem Zwischenkanal abgekehrten Seite der Eintrittsöffnung mit der Folge, daß dieser Abschnitt, dessen Länge mit den Hubbewegungen des Kolbens sich ändert, in diesen Positionen von dem durch die Eintrittsöffnung eintretenden Material nicht durchströmt wird. Dies ist insbesondere dann nachteilig, wenn der Kolben verfahrensbedingt einen Hub ausführt, bei welchem in keiner Endposition des Kolbens der Aufnahmekanal über seine gesamte Länge von dem durch die Eintrittsöffnung eintretenden Material durchstömt wird. Jedoch ist es auch bei anderen Betriebsbedingungen unvermeidbar, daß sich im Aufnahmekanal bei jedem Arbeitszyklus für eine bestimmte Zeit Material befindet, welches stagniert, wobei jenes Material, welches zu Beginn des vom Kolben ausgeführten Füllhubes als erstes in den nicht mehr durchflossenen Bereich des Aufnahmekanals gelangt, als letztes beim folgenden Entleerungshub aus dem Aufnahmekanal durch das frische, durch die Eintrittsöffnung nachströmende Material in Richtung auf die Ableitung verdrängt wird. Selbst dann, wenn die Verweilzeiten des stagnierenden Materials im Kopf so kurz sind, daß dieses Material dadurch keine Qualitätseinbuße erleidet, hat die vorbeschriebene Ausgestaltung jedoch zur Folge, daß das Material den Kopf nicht in der zeitlichen Reihenfolge verläßt, in welcher es durch die Eintrittsöffnung in den Kopf eingetreten ist. Dies kann insbesondere bei empfindlicheren Kunststoffmaterialien zu merklichen Qualitätseinbußen der Fertigerzeugnisse führen.

Entsprechendes gilt für die Vorrichtung gemäß DE-AS-21 61 356, bei welcher der thermoplastische Kunststoff in gleicher Weise in den Extrusionskopf eingeführt wird. Ein Unterschied besteht nur insoweit, als bei dieser Vorrichtung der Kolben im Querschnitt ringförmig ausgebildet ist, so daß er eine äußere und eine innere Mantelfläche aufweist.

Die Nachteile der beiden vorstehend erörterten bekannten Vorrichtungen sucht eine weitere Vorrichtung gemäß DE-AS-26 25 786 zu vermeiden. Dabei erfolgt die Zufuhr des thermoplastischen Materials axial in den hier ebenfalls ringförmigen Kolben, und zwar unter Verwendung von Teleskoprohren, deren Länge so gewählt ist, daß sie die Hubbewegungen des Kolbens überbrücken. Diese Ausbildung hat jedoch den Nachteil, daß durch die Relativbewegung zwischen Kolben und den Teleskoprohren letztere ebenfalls die Wirkung von Kolben haben, welche Tatsache sich nachteilig bezüglich der Druck- und Fließverhältnisse im Extrusionskopf auswirken kann. Zudem hat diese Art der Materialzuführung zur Folge, daß der Extrusionskopf verhältnismäßig lang ist.

Ferner offenbart die DE-A-36 35 334 einen Extrusionskopf für die Herstellung von Vorformlingen, deren Wandung aus einem Laminat besteht. Hierbei sind die Extruder zum Zwecke der Materialzuführung direkt mit dem Kolben verbunden, so daß sie an den Bewegungen des Kolbens teilnehmen müssen. Dies erfordert einen zusätzlichen konstruktiven Aufwand. Hinzu kommt, daß immer verhältnismäßig große Massen in Bewegung sind.

Der Erfindung liegt die Aufgabe zugrunde, eine Vorrichtung der einleitend beschriebenen Art so abzuwandeln, daß sie die Nachteile bekannter Vorrichtungen nicht aufweist. Insbesondere soll vermieden werden, daß im Fließweg des Materials Bereiche vorhanden sind, in denen das Material während bestimmter Zeitabschnitte stagniert. Andererseits soll die verhältnismäßig einfache und übersichtliche Art der Materialzuführung beibehalten werden.

Diese Aufgabe wird durch die Merkmale im Kennzeichen des Anspruches 1 gelöst. Dadurch, daß an beiden Endbereichen des Aufnahmekanals jeweils ein Kanalsystem anschließt, das einen Teilstrom des vom Extruder kommenden Materials aufnimmt und in Richtung auf den Speicherraum führt, ist eine vollständige Durchströmung des Aufnahmekanals unabhängig vom verfahrensbedingten Hub und damit von der Lage des Kolbens zu der Öffnung, durch welche das Material in den Kopf und damit den Aufnahmekanal eintritt, gewährleistet. Vorteilhaft ist auch, daß der zusätzliche Aufwand, der erforderlich ist, um auch den zweiten Endbereich des Aufnahmekanals an eine Ableitung anzuschließen, gering ist, da sich am grundsätzlichen Aufbau des Kolbens dadurch wenig ändert. Es ist lediglich erforderlich, die den Kolben bildenden hülsenartigen Teile noch einer zusätzlichen Bearbeitung zu unterziehen, um das zweite Zwischenkanalsystem anzubringen. Die Erfindung ist besonders vorteilhaft anwendbar zu Herstellung von Vorformlingen mit mehrschichtiger Wandung im Koextrusionsverfahren.

Weitere Möglichkeiten der Ausgestaltung der Vorrichtung ergeben sich aus den Unteransprüchen. Ein weiterer Vorteil der Erfindung besteht darin, daß sie bezüglich der Ausgestaltung insbesondere der Verteilerkanäle die Verwendung praktisch aller in Betracht kommender Arten derartiger Kanäle zuläßt, die zum Stand der Technik gehören.

In der Zeichnung sind zwei Ausführungsbeispiele der Erfindung im Schema dargestellt. Es zeigen:
- Fig. 1: den Längsschnitt eines Extrusionskopfes, in welchem der Kolben die Position am Ende des Ausstoßhubes einnimmt,
- Fig. 2: einen Schnitt nach der Linie II-II der Fig. 1,
- Fig. 3: einen Schnitt nach der Linie III-III der Fig. 1,
- Fig. 4: eine der Fig. 1 entsprechende Darstellung, jedoch mit dem Kolben in der Position am Ende des Füllhubes,
- Fig. 5: eine der Fig. 1 entsprechende Darstellung einer zweiten Ausführungsform.

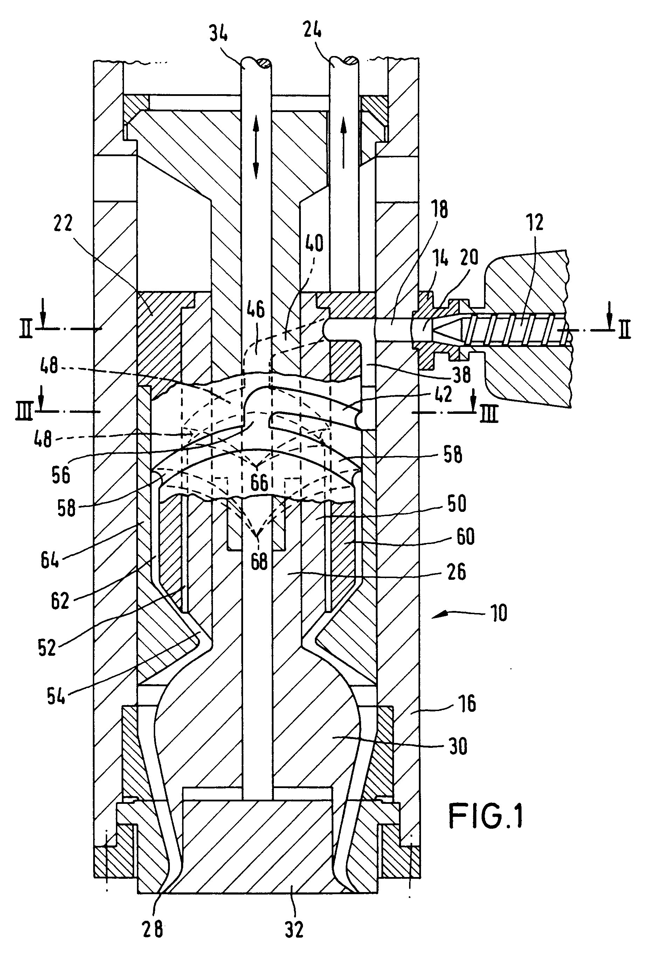

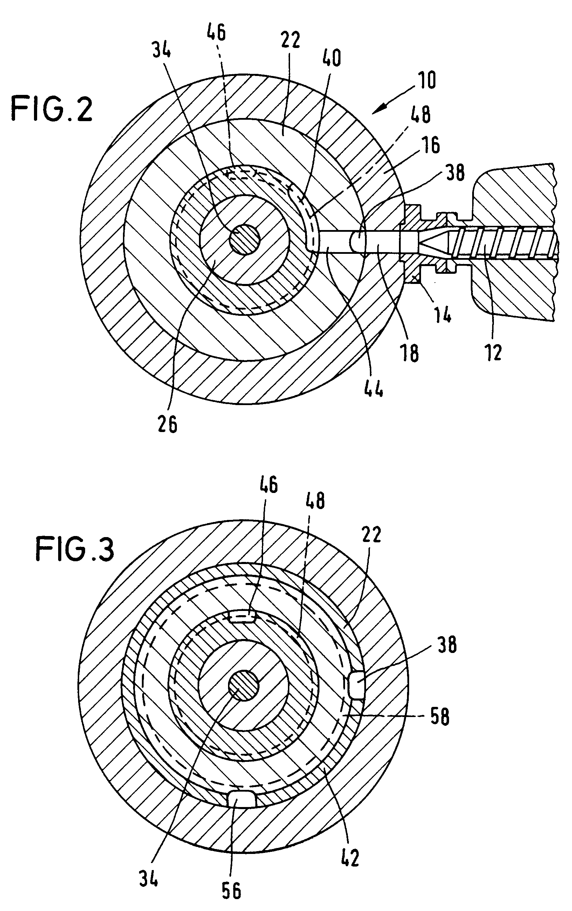

Bei dem in den Figuren 1 - 4 dargestellten Ausführungsbeispiel ist dem Extrusionskopf 10 ein Extruder 12 zugeordnet, in welchem der thermoplastische Kunststoff plastifiziert wird. Der Extrusionskopf 10 ist über einen Flansch 14 derart mit dem Extruder 12 verbunden, daß die im Gehäuse 16 des Extrusionskopfes 10 befindliche Eintrittsöffnung 18 für das thermoplastische Material mit dem Kanal 20 fluchtet, durch welchen das plastifizierte Material den Extruder 12 verläßt.

Innerhalb des Gehäuses 16 ist ein Ringkolben 22 axial hin- und herbewegbar angeordnet. Diesem Ringkolben sind Kolbenstangen 24 zugeordnet, von denen in der Zeichnung nur eine dargestellt ist. Die Kolbenstangen sind mit einer hydraulischen Kolben-Zylinder-Anordnung für den Antrieb des Ringkolbens 22 versehen. Dazu wird auf die DE-AS-25 44 609 und die US-PS-4,338,071 verwiesen, die derartige Anordnungen und Funktionen offenbaren.

Innerhalb des Gehäuses 16 und dazu koaxial ist weiterhin ein Hohldorn 26 angeordnet, der gemeinsam mit dem Gehäuse 16 einen Ringraum begrenzt, innerhalb dessen der Ringkolben 22 sich auf- und abbewegt. An dem der Austrittsöffnung 28 des Extrusionskopfes 10 zugekehrten Ende geht der Hohldorn 26 in eine Verdickung 30 über, innerhalb derer ein Kern 32 axial hin- und herverschiebbar angeordnet ist, der die ringförmige Austrittsöffnung 28 innenseitig begrenzt. Der Kern 32 wird von einer innerhalb des Hohldorns 26 angeordneten Stange 34 getragen, die ihrerseits mit einer Kolben-Zylinder-Anordnung verbunden ist. Auch dazu wird auf die DE-AS-25 44609 bzw. die US-PS-4,338,071 verwiesen, in denen die Funktionen der Teile, insbesondere die Steuerung der Bewegung des Kerns 32 zur Steuerung der Wanddicke des herzustellenden Vorformlings, beschrieben sind.

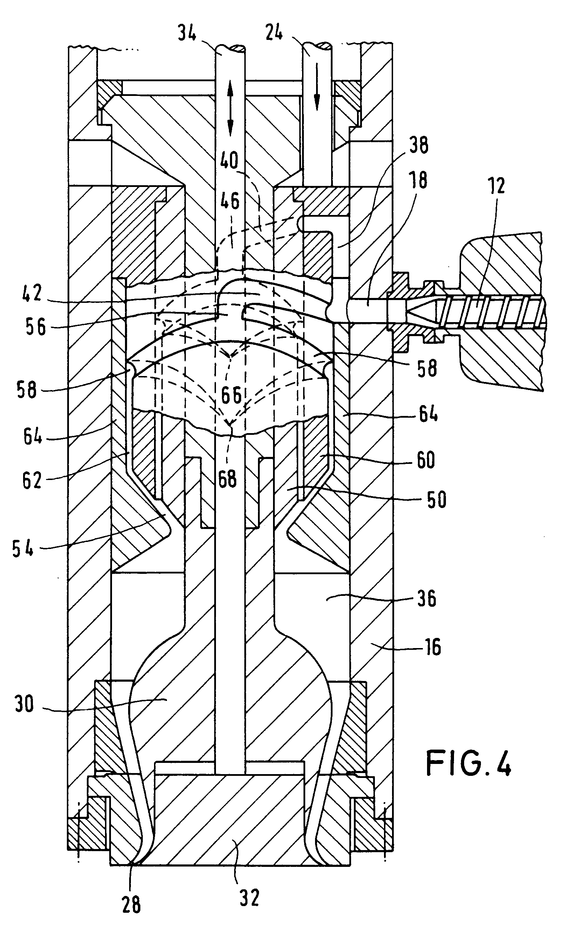

Der von Gehäuse 16 und Ringdorn 26 geführte Ringkolben 22 ist zwischen den beiden in Fig. 1 bzw. Fig. 4 dargestellten Extrempositionen hin- und herbewegbar, wobei bei der Bewegung von der Position gemäß Fig. 4 in die gemäß Fig. 1 ein Speicherraum 36 mit dem vom Extruder 12 kommenden thermoplastischen Material gefüllt und der Kolben in Richtung auf die Position gemäß Fig. 4 durch dieses Material verdrängt wird. Sobald der Kolben die in Fig. 4 dargestellte Endposition erreicht hat, wird der Ringkolben 26 durch entsprechende Beaufschlagung seines Antriebszylinders in Richtung auf die Austrittsöffnung 28 bis zum Erreichen der in Fig. 4 dargestellten Endposition verschoben, wobei das im Speicherraum 36 befindliche Material in Richtung auf die Austrittsöffnung 28 zur Bildung eines schlauchförmigen Vorformlings, der aus der Austrittsöffnung 28 austritt, verdrängt wird.

Der Extrusionskopf gemäß der Erfindung unterscheidet sich von jenem gemäß den beiden letztgenannten Veröffentlichungen insbesondere dadurch, daß das thermoplastische Material durch am Ringkolben 22 angebrachte Kanäle und durch den Ringkolben in den Speicherraum 36 geführt wird. Der Ringkolben 22 ist an seiner äußeren Mantelfläche mit einer sich parallel zur Längsachse des Extrusionskopfes 10 erstreckenden, einen Aufnahmekanal 38 bildenden nutförmigen Ausnehmung versehen, deren Länge dem Extremhub des Ringkolbens 22 entspricht und die so angeordnet ist, daß sie der Eintrittsöffnung 18 im Gehäuse 16 gegenüberliegt. Dieser Aufnahmekanal 38 für das thermoplastische Material ist durch die innere Begrenzungsfläche des Gehäuses 16 außenseitig begrenzt und, abgesehen von der Eintrittsöffnung 18, abgeschlossen. An beiden Enden des Aufnahmekanals schließt jeweils eine im Ringkolben 22 angebrachte Ableitung 40 bzw. 42 an, die jeweils den Abschnitt eines Kreisbogens von 90° bildet, wobei die beiden Ableitungen 40, 42 koaxial zueinander angeordnet sind derart, daß die näher an der Austrittsöffnung 20 des Extrusionskopfes 10 liegende Ableitung 42 auf dem Kreisbogen mit dem größeren Durchmesser liegt. Zur Ableitung 40 gehört noch ein radialer Kanalabschnitt 44, der den radialen Abstand zwischen Aufnahmekanal 38 und Kanal 40 überbrückt. An seinem dem Aufnahmekanal 38 abgekehrten Ende geht der kreisbogenförmige, etwas geneigt verlaufende Kanal 40 in einen im wesentlichen parallel zur Längsachse des Extrusionskopfes verlaufenden Zwischenkanal 46 über, an den sich ein Verteilerkanal 48 anschließt, der in der Projektion parallel zur Längsachse des Extrusionskopfes sich über 360° erstreckt. An diesen Verteilerkanal 48, der auf der äußeren Mantelfläche einer Hülse 50 angeordnet ist, die Bestandteil des Ringkolbens 22 ist, schließt sich in Richtung auf den Speicheraum 36 ein Ringkanal 52 an, der in einen Sammelkanal 54 mündet. Letzterer ist zum freien Stirnende des Ringkolbens 22 offen.

An die andere Ableitung 42, die in Umfangsrichtung gegenüber dem Kanal 40 in entgegengesetzter Richtung angeordnet ist, schließt sich der vertikale Zwischenkanal 56 an, der in einen Verteilerkanal 58 mündet, der koaxial zum Verteilerkanal 48, jedoch mit größerem Durchmesser sich in der Projektion parallel zur Längsachse des Extruderkopfes ebenfalls über einen Umfang von 360° erstreckt. Dieser Verteilerkanal 58 ist auf der äußeren Mantelfläche einer Hülse 60 angeordnet, die ebenfalls Teil des Ringkolbens 22 ist. An den Verteilerkanal schließt sich ein Ringkanal 62 an, der ebenfalls in den Sammelkanal 54 mündet. Der innere Ringkanal 52 wird von den beiden Hülsen 50 und 60 begrenzt. Der äußere Ringkanal 62 wird von der Hülse 60 und einer Außenhülse 64 begrenzt.

Der durch die Eintrittsöffnung 18 in den Hubkanal 38 eintretende Materialstrom wird unabhängig von der Stellung des Ringkolbens 22 in zwei Teilströme aufgeteilt, die in die Ableitungen 40 und 42 einströmen. Wie die Aufteilung auf die beiden Ableitungen 40 und 42 sowie das diesen im Ringkolben 22 nachgeschaltete Kanalsystem erfolgt, hängt im wesentlichen von den jeweiligen Strömungswiderständen ab, die entsprechend der gewünschten, z. B. hälftigen Aufteilung durch entsprechende Bemessung der Kanäle usw. eingestellt werden können. Zwar erfahren die beiden der Ableitung 40 einerseits und der Ableitung 42 andererseits zugeordneten Teil-Materialströme im Zuge der Bewegungen des Ringkolbens 22 im Aufnahmekanal 38 gewisse Veränderungen der Strömungswiderstände, und zwar in Abhängigkeit von der Position des Aufnahmekanals 38 zur Eintrittsöffnung 18. Diese Änderungen sind jedoch so gering, daß sie auf die Aufteilung der beiden Materialströme keine merklichen Auswirkungen haben.

Jeder der beiden Teilströme wird im jeweils zugehörigen Verteilerkanal 48 bzw. 58 zur Bildung eines Hohlstranges über den Umfang verteilt und dabei in Umfangsrichtung verbreitert, wobei er sich in einem Bereich, der gegenüber dem jeweils zugehörigen Zwischenkanal 46 bzw. 56 um 180° versetzt ist, zu einem ringförmigen Querschnitt schließt. D. h., daß die beiden Randbereiche des sich auf 360° verbreiternden Teilstroms ineinander übergehen, also miteinander verschweißen. Bei dem durch die Ableitung 40 fließenden Teilstrom, der im Verteilerkanal 48 über den Umfang verteilt wird, schließt sich der Teilstrom zum ringförmigen Querschnitt im Bereich 66, im Falle des durch den Verbindungskanal 42 einströmenden Teilstroms im Bereich 68, wobei das vollständige Schließen zum ringförmigen Querschnitt ggf. auch etwas unter den Bereichen 66 bzw. 68 liegen kann. Da die beiden vertikalen Zwischenkanäle 46, 56 um 180° gegeneinander versetzt angeordnet sind, sind auch die Bereiche, in denen jeweils einer der beiden Teilströme 66, 68 sich zum ringförmigen Querschnitt schließt, um 180° gegeneinander versetzt, so daß diese Bereiche, die zu längsverlaufenden Schweißnähten am Vorformling führen, nicht durch die gesamte Wandung des herzustellenden Vorformlings hindurchgehen und somit keine Schwachstelle bilden. Dazu wird auf DE-OS 21 00 192 und US-PS 3,801,254 hingewiesen, die einen so ausgebildeten Vorformling offenbaren.

Die beiden durch die Ringkanäle 52 und 62 strömenden Teilströme werden im Sammelkanal 54 zu einem zweischichtigen Laminat verbunden, welches dann aus der stirnseitigen Begrenzungsfläche des Ringkolbens 22 in den Speicherraum 36 als Laminat eintritt.

Die Fig. 1 und 4 lassen erkennen, daß die gewählte Ausgestaltung des Aufnahmekanals 38 mit den daran anschließenden Ableitungen 40 und 42 unter allen betrieblichen Bedingungen sicherstellt, daß der Aufnahmekanal 38 keine toten Zonen bildet, in welchen irgendwelches Material unkontrolliert verweilt und erst zu einem späteren Zeitpunkt wieder in den fließenden Materialstrom einbezogen wird.

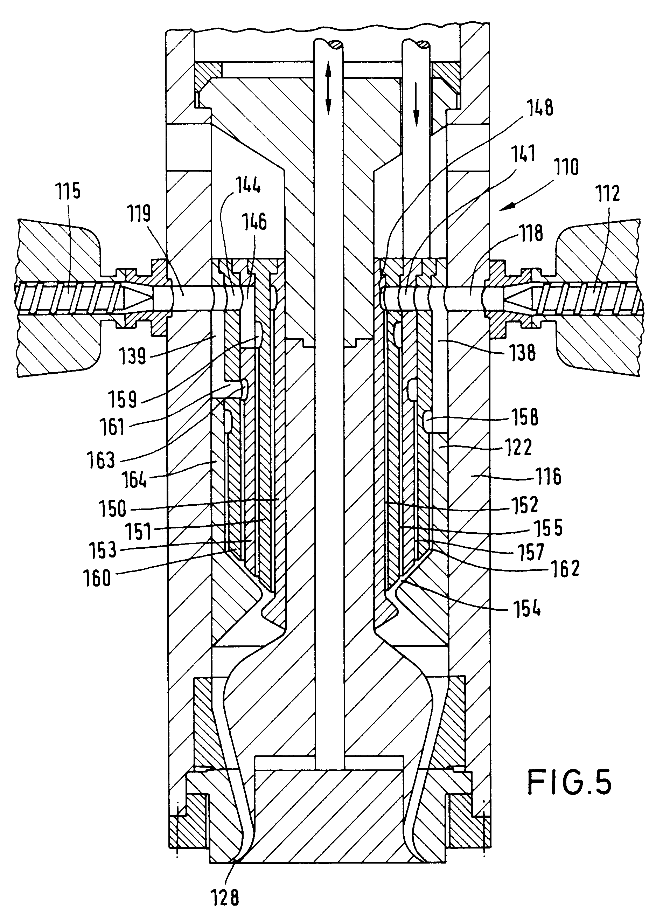

Da beim Ausführungsbeispiel gemäß den Fig. 1 - 4 lediglich ein Extruder 12 vorgesehen ist, besteht der Vorformling auch nur aus einer Materialart, da beide Teilströme, die sich im Sammelkanal 54 vereinigen, aus gleichem Material entstehen. Es ist aber auch ohne weiteres möglich, die Wandung des Vorformlings als Laminat auszubilden, bei welchem wenigstens zwei Schichten aus unterschiedlichen Materialien bestehen. Eine entsprechende Ausführungsform ist in Fig. 5 der Zeichnung dargestellt, in welcher Teile, die denen des Ausführungsbeispiels gemäß den Figuren 1 - 4 entsprechen, mit gleichen, jedoch um jeweils 100 höheren Bezugszeichen versehen sind.

Da der Extrusionskopf 110 gemäß Fig. 5 zur Herstellung eines Vorformlings dient, dessen Wandung ein Laminat ist, das aus zwei unterschiedlichen Materialien besteht, sind dem Extrusionskopf 110 zwei Extruder 112 und 115 zugeordnet. Demzufolge weist das Gehäuse 116 zwei Eintrittsöffnungen 118, 119 auf. Der Ringkolben 122 ist somit mit zwei Aufnahmekanälen 138, 139 versehen, von denen der Aufnahmekanal 138 der Eintrittsöffnung 118 und der Aufnahmekanal 139 der Eintrittsöffnung 119 gegenüberliegt.

Der Ringkolben 122 weist insgesamt fünf Hülsen 150, 151, 153, 160 und 164 auf, die paarweise vier Ringkanäle 152, 155, 157 und 162 begrenzen. Diesen Ringkanälen ist ein gemeinsamer Sammelkanal 154 nachgeschaltet.

Der aus dem Extruder 112 kommende Materialstrom wird im Aufnahmekanal 138 in zwei Teilströme unterteilt, von denen der eine über eine Ableitung 141 in den Verteilerkanal 148 einmündet, von welchem das Material in den Ringkanal 152 fließt. Der andere Teilstrom fließt aus dem Aufnahmekanal 138 in die Ableitung 158, bei der es sich um den sich ebenfalls über den Gesamtumfang ersteckenden Verteilerkanal handelt, an den sich der Ringkanal 162 anschließt. Der Verteilerkanal 158 hat den größten Durchmesser aller Verteilerkanäle, so daß ein besonderer Verbindungskanal zwischen Aufnahmekanal 138 und Verteilerkanal 158 nicht erforderlich ist.

Das aus dem Extruder 115 kommende thermoplastische Material gelangt zunächst in den Aufnahmekanal 139, in welchem es in zwei Teilströme unterteilt wird, von denen einer durch eine als radialer Kanalabschnitt ausgebildete Ableitung 144 in einen vertikalen Zwischenkanal 146 gelangt, der in einen Verteilerkanal 159 mündet, von dem aus das Material in den Ringkanal 155 strömt. Der andere Teilstrom fließt aus dem Aufnahmekanal 139 zunächst durch eine als Zwischenkanal ausgebildete Ableitung 161, die in einen Verteilerkanal 163 mündet. Aus letzterem fließt das diesen Teilstrom bildende Material in den nachgeschalteten Ringkanal 157.

Aus den vorstehend erläuterten Fließwegen der insgesamt vier Teilströme ergibt sich, daß im Sammelkanal 154 ein Laminat gebildet wird, dessen beiden äußeren Schichten aus Material bestehen, welches aus dem Extruder 112 stammt. D. h., daß die beiden äußeren Schichten des Laminats aus dem gleichen Kunststoffmaterial bestehen. Die beiden inneren Schichten des Laminats entstammen dem Extruder 115, wobei hier ggf. die Anordnung auch so getroffen sein kann, daß die Einspeisung der beiden Teilströme in den jeweiligen Verteilerkanal 159 bzw. 161 an Orten erfolgen kann, die in Umfangsrichtung gegeneinander versetzt sind, so daß demzufolge auch die Bereiche, in denen jeweils ein Teilstrom sich zum ringförmigen Querschnitt schließt, gegeneinander versetzt sind und eine durchgehende Schweißnaht vermieden wird. Entsprechendes kann auch für die Teilströme aus dem Extruder 112 gelten, wenngleich hier aufgrund der Tatsache, daß die auf diesen Extruder zurückgehenden Schichten des Laminats durch die aus dem Extruder 115 stammenden Materialschichten voneinander getrennt sind, der Lage der Schweißnähte keine so große Bedeutung zuzukommen braucht.

Die Darstellung des Extrusionskopfes in Fig. 5 ist zur Erzielung einer besseren Übersicht stark vereinfacht. So ist es vorzuziehen, die Verteilerkanäle auch bei der Ausführungsform gemäß Fig. 5 entsprechend den Verteilerkanälen des Ausführungsbeispiels gemäß Figuren 1 - 4 auszugestalten, um so die Gleichmäßigkeit der Verteilung über den Umfang zu fördern und die Zusammenfließbereiche bei der Hohlstrangbildung festzulegen. Dies würde jedoch an der grundsätzlichen Lehre der Erfindung, an beiden Endbereichen der Aufnahmekanäle 138, 139 Ausgänge vorzusehen, durch die das Material abfließen kann, nichts ändern. Die Tatsache, daß beim Extrusionskopf gemäß Fig. 5 sämtliche Verteilerkanäle in Ebenen umlaufen, die senkrecht zur Längsachse des Extrusionskopfes liegen, führt auch dazu, daß der Aufnahmekanal 138 etwas länger ist als der Aufnahmekanal 139 und somit länger ist als der Hub des Ringkolbens 122. Dies ist jedoch für den durch die Erfindung angestrebten Effekt bedeutungslos, da in jedem Fall sichergestellt ist, daß tote Zonen im Aufnahmekanal 138 vermieden werden, in denen das thermoplastische Material während einer bestimmten Zeitdauer stagniert. Auch der Aufnahmekanal 138 wird über seine gesamte Länge bei jeder Stellung des Ringkolbens 122 durchströmt.

Für beide Ausführungsbeispiele gilt, daß in jeder Schicht des die Wandung eines Vorformlings bildenden Laminats die diese Schicht bildenden Materialteilchen in der Reihenfolge aus dem Extrusionskopf austreten, in der sie in diesen eingetreten sind.

Abweichend von der Darstellung in der Zeichnung kann der den Speicherraum entleerende Kolben auch in anderer Weise, z. B. analog der Vorrichtung gemäß DE-A-16 29 404 oder auch als Vollkolben, ausgebildet sein. Selbstverständlich können auch bei entsprechend dimensioniertem Kolben mehr Kanalsysteme vorgesehen sein, so daß auch Vorformlinge, deren Wandung mehr als vier Schichten enthält, hergestellt werden können.

## Patentansprüche

1. Vorrichtung zum Herstellen von Hohlkörpern aus thermoplastischem Kunststoff, deren Wandung aus einem wenigstens zwei Schichten aufweisenden Laminat besteht, durch Extrusions-Blasformen mit einer Extrusionseinheit, die wenigstens einen Extruder (12; 112, 115) und einen Extrusionskopf (10; 110) mit einem Gehäuse (16; 116) und einer ringförmigen Austrittsöffnung (28; 128) aufweist, wobei der Extrusionskopf (10; 110) mit wenigstens einem Speicherraum (36) zum Speichern von in dem wenigstens einen Extruder (12; 112, 115) plastifiziertem Material und mit einem Kolben (22; 122) zum Ausstoßen des gespeicherten Materials aus dem Speicherraum (36) zur Bildung von Vorformlingen versehen ist und der Kolben (22, 122) an seiner Mantelfläche mit wenigstens einer sich parallel zur Bewegungsrichtung des Kolbens verlaufenden nutförmigen Ausnehmung versehen ist, die mit dem Gehäuse wenigstens einen Aufnahmekanal (38; 138, 139) bildet und wenigstens einer im Gehäuse angeordneten öffnung (18; 118, 119) für den Eintritt des thermoplastischen Kunststoffes in den Extrusionskopf (10; 110) gegenüberliegt und in Bewegungsrichtung des Kolbens (22; 122) eine Länge aufweist, die wenigstens dem Hub des Kolbens (22; 122) entspricht, dadurch gekennzeichnet, daß der wenigstens eine Aufnahmekanal (38; 138, 139) an seinen beiden Endbereichen mit jeweils einer vom Kolben getragenen Ableitung (40, 42, 44; 141, 144, 161) verbunden ist und durch jede Ableitung ein Teilstrom des durch die Eintrittsöffnung (18; 118, 119) eintretenden thermoplastischen Kunststoffes in Richtung auf den Speicherraum (36) fließt.

2. Vorrichtung nach Anspruch 1, dadurch gekennzeichnet, daß die Ableitungen wenigstens zwei sich in Umfangsrichtung des Kolbens erstreckende Verteilerkanäle (48, 58; 148, 158, 159, 163) aufweisen, in denen der durch den jeweiligen Zwischenkanal (40, 42, 44; 141, 144, 161) zugeführte Materialstrom eine Verbreiterung in Umfangsrichtung erfährt.

3. Vorrichtung nach Anspruch 2, dadurch gekennzeichnet, daß wenigstens einer der Verteilerkanäle (48, 58; 148, 158, 159, 163) sich über einen Umfang von 360° erstreckt.

4. Vorrichtung nach Anspruch 2, dadurch gekennzeichnet, daß wenigstens zwei Verteilerkanäle vorgesehen sind, die sich jeweils über einen umfangsbereich von etwa 180° erstrecken und in einen gemeinsamen Ringkanal, der sich über 360° erstreckt, fortsetzen.

5. Vorrichtung nach Anspruch 1, dadurch gekennzeichnet, daß wenigstens zwei Aufnahmekanäle (138, 139) vorgesehen sind und in den Extruderrrn (112, 115) wenigstens zwei unterschiedliche Materialien verarbeitet werden.

## Claims

1. Apparatus for producing hollow bodies of thermoplastic material, the wall of which comprises a laminate having at least two layers, by extrusion blow moulding, comprising an extrusion unit which has at least one extruder (12; 112, 115) and an extrusion head (10; 110) with a housing (16; 116) and an annular discharge opening (28; 128), wherein the extrusion head (10; 110) is provided with at least one storage chamber (36) for storage of material which is plasticised in the at least one extruder (12; 112, 115), and a piston (22; 122) for ejection of the stored material from the storage chamber (36) to form preforms, and the piston is provided at its peripheral surface with at least one groove-like opening which extends parallel to the direction of movement of the piston and which with the housing forms at least one receiving passage (38; 138, 139) and is disposed opposite at least one opening (18; 118, 119) arranged in the housing for the inlet of the thermoplastic material into the extrusion head (10; 110) and in the direction of movement of the piston (22; 122) is of a length which corresponds at least to the stroke movement of the piston (22; 122) characterised in that the at least one receiving passage (38; 138, 139) is connected at its two end regions to a respective delivery conduit (40, 42, 44; 141, 144, 161) carried by the piston and a partial flow of the thermoplastic material which enters through the inlet opening (18; 118, 119) flows through each delivery conduit towards the storage chamber (36).

2. Apparatus according to claim 1 characterised in that the delivery conduits have at least two distributor passages (48, 58; 148, 158, 159, 163) which extend in the peripheral direction of the piston and in which the flow of material which is fed through the respective intermediate passage (40, 42, 44; 141, 144, 161) experiences a broadening in the peripheral direction.

3. Apparatus according to claim 2 characterised in that at least one of the distributor passages (48, 58; 148, 158, 159, 163) extends over a peripheral extent of 360°.

4. Apparatus according to claim 2 characterised in that there are provided at least two distributor passages which each extend over a respective peripheral region of about 180° and which continue in a common annular passage which extends over 360°.

5. Apparatus according to claim 1 characterised in that there are provided at least two receiving passages (138, 139) and at least two different materials are processed in the extruders (112, 115).

## Revendications

1. Dispositif pour fabriquer des corps creux en matière thermoplastique ayant une paroi stratifiée formée d'au moins deux couches, en opérant par extrusion-soufflage au moyen d'une unité d'extrusion qui comporte au moins une extrudeuse (12;112,115) et une tête d'extrusion (10;110) ayant un corps (16;116) et un orifice de sortie annulaire (28;128), la tête d'extrusion (10;110) contenant au moins une chambre d'accumulation (36) pour accumuler la matière plastifiée dans chaque extrudeuse (12;112,115) et un piston (22;122) pour refouler hors de la chambre d'accumulation (36) la matière qui s'y est accumulée, afin de réaliser des ébauches préliminaires de moulage, la surface du piston (22;122) comportant au moins une gorge évidée parallèle à l'axe du mouvement du piston, cette gorge coopérant avec le corps (16;116) pour constituer au moins un canal de réception (38;138, 139) et se trouvant en regard d'au moins un orifice (18;118,119) prévu dans le corps pour l'entrée de la matière thermoplastique dans la tête d'extrusion (10;110), cette gorge de réception présentant dans le sens du mouvement du piston (22;122) une longueur qui correspond au moins à la course du piston (22;122), caractérisé en ce que chaque canal de réception (38;138,139) communique à l'endroit de chacune de ses extrémités avec une dérivation (40,42,44;141,144,161) qui est portée par le piston, et en ce que chaque dérivation permet en direction de la chambre d'accumulation (36) l'écoulement d'un courant partiel de la matière thermoplastique qui a pénétré dans la tête d'extrusion par chacun des orifice d'entrée (18;118,119).

2. Dispositif selon la revendication 1, caractérisé en ce que les dérivations sont raccordées à au moins deux canaux de distribution (48,58;148,158,159,163) qui s'étendent dans le sens de la périphérie du piston et dans lesquels s'élargit en nappe dans le sens de la périphérie le courant de matière qui arrive par chacun des canaux intermédiaires (40,42,44;141,144,161).

3. Dispositif selon la revendication 2, caractérisé en ce qu'au moins l'un des canaux de distribution (48,58;148,158,159,163) s'étend en périphérie du piston sur une amplitude de 360°.

4. Dispositif selon la revendication 2, caractérisé en ce qu'il comporte au moins deux canaux de distribution qui s'étendent chacun sur une amplitude d'environ 180° dans le sens de la périphérie du piston, et qui débouchent dans un canal annulaire commun s'étendant sur 360°.

5. Disposition selon la revendication 1, caractérisé en ce qu'il comporte au moins deux canaux de réception (138,139), et en ce que les extrudeuses (112,115) assurent la préparation d'au moins deux matières différentes.
